# EUROPÄISCHE PATENTANMELDUNG

(11) **EP 4 557 540 A1**
(43) Veröffentlichungstag der Anmeldung: **21.05.2025**
(21) Anmeldenummer: 24214086.1
(22) Anmeldetag: 20.11.2024
(51) Int. Cl.: H02G 3/03, H02G 9/06

(54) **KABELTRASSE UND BETRIEB EINER KABELTRASSE**

(30) Priorität: 20.11.2023 DE 102023132272
(71) Anmelder: Future Energy Technologies PLC, Birkirkara BKR 9034 (MT)
(72) Erfinder: Semmling, Torsten, 06571 Roßleben (DE); Puttke, Bernhard, 82481 Mittenwald (DE); Noll, Thomas, 85110 Kipfenberg (DE)
(74) Vertreter: dompatent von Kreisler Selting Werner - Partnerschaft von Patent- und Rechtsanwälten mbB

(57) **Zusammenfassung**

Kabeltrasse zur unterirdischen Verlegung von Stromkabeln mit mindestens einem flächigen Wärmeleitelement, mehreren Stromkabeln, welche in einem Abstand zueinander mit dem Wärmeleitelement verbunden und thermisch gekoppelt sind zur Abgabe von Wärme des jeweiligen Stromkabels an das Wärmeleitelement, wobei das Wärmeleitelement und die Stromkabelkabel im Erdreich angeordnet sind.

## Beschreibung

Die vorliegende Erfindung betrifft eine Kabeltrasse zur unterirdischen Verlegung von Stromkabeln sowie ein Verfahren zum Betrieb einer solchen Kabeltrasse. Weiterhin betrifft die vorliegende Erfindung ein Kabeltrassenelement zur Ableitung der Verlustwärme der Kabeltrasse an das Erdreich. Insbesondere betrifft die Erfindung ein Verfahren zur aktiven oder passiven Kühlung der Kabeltrassen sowie zur Nutzbarmachung der Verlustwärme der Stromkabelkabel für andere Anwendungen wie z.B. einem Wärmenetz.

Mit steigendem Strombedarf der Industrie und Gesellschaft ist es erforderlich, das bestehende Stromnetz auszubauen und zu erneuern. Aufgrund des beschlossenen Verzichts auf fossile Energieträger und der gleichzeitig erfolgenden Elektrifizierung der Sektoren Wärme und Verkehr steigt der Strombedarf bis zum Jahr 2045 stark an, wozu neue Kabeltrassen zur Weiterleitung und Verteilung des Stroms geschaffen werden müssen, welche insbesondere ausgebildet sind als Hochspannungstrassen. Zur Vermeidung von Oberlandleitungen werden neue Kabeltrassen zumeist im Erdreich verlegt. Hierbei werden die einzelnen Hochspannungskabel nebeneinander in einem horizontalen Abstand zueinander verlegt, der so bemessen ist, dass die Wärmeabfuhr der Kabel an das Erdreich ausreichend ist, um die Lebensdauer bei Betrieb der Trasse mit der Auslegungsleistung nicht zu beeinträchtigen. Dies erfordert jedoch einen erheblichen Platzbedarf, sodass eine Stromtrasse in heutiger Bauweise üblicherweise eine Breite von 30m oder mehr aufweisen, in denen weder eine Bebauung noch eine Bepflanzung mit tiefwurzelnden Bäumen zulässig ist. Neben den damit verbundenen hohen Kosten, Umweltschäden und Ausführungsrisiken für den Bau in konventioneller Bauausführung, steigt mit dem erforderlichen Platzbedarf auch die Schwierigkeit eine solche Trassenführung überhaupt zu finden und zu ermöglichen.

Weiterhin besteht bei oberflächennah im Erdreich verlegten Hochspannungstrassen das Problem, dass Abwärme aus den Hochspannungskabeln, insbesondere den Hochspannungsgleichstromübertragungs(HGÜ)-Kabel, nur unzureichend in das Erdreich abgeleitet wird, da das Erdreich insbesondere im trockenen Zustand nur eine geringe Wärmeleitung von ca. 0.3 W/mK aufweist. Somit kann es lokal zu einer Aufheizung der Kabel und des Erdreichs auf bis zu 90°C kommen. Mit steigender Temperatur steigt auch der Systemwiderstand im Hochspannungskabel selber, sodass die elektrischen Verluste weiter steigen. Heutige Hochspannungstrassen weisen üblicherweise eine Verlustquote von 0,5% pro 100km auf, was im Fall einer 4GW HGÜ-Trasse zu einer Abwärme von ca. 200kW/km führt. Diese erheblichen Wärmemengen müssen abgeführt werden. Ist dies nicht möglich, muss entweder die Leistung der Hochspannungstrasse reduziert werden, um eine Überschreitung der materialbedingten Grenztemperatur von z.B. Kabelkern oder Kabelhülle zu vermeiden, welche zur Beschädigung beispielsweise der Hochspannungskabel führen würde, oder es müssen teure Bettungsmaterialien mit verbesserten thermischen Eigenschaften zur Einbettung der Kabel verwendet werden, was mit einem erheblichen logistischen Mehraufwand sowie Kosten verbunden ist. Die Hochspannungstrasse steht somit im Stromnetz nur mit einer verminderten Leistung zur Verfügung, die durch das Bottleneck der Trassenführung mit der schlechtesten Wärmeleitung des Untergrunds gegeben ist.

Weiterhin werden zur Vermeidung einer gegenseitigen thermischen Beeinflussung die einzelnen Hochspannungskabel in einem größeren horizontalen Abstand zueinander verlegt. Auch wenn sich dies positiv auf die Ableitung der entstehenden Wärme auswirkt, wird hierdurch der erforderliche Platzbedarf einer solchen Hochspannungstrasse, deren umweltrelevante Belastungen bei der Bauausführung, die Massen an Aushubmaterial und die Sichtbarkeit als Schneise in der Landschaft weiter erhöht.

Aufgabe der vorliegenden Erfindung ist es eine kompakte Kabeltrasse mit einer erhöhten Verfügbarkeit sowie einer höheren Leistungsdichte gegenüber dem Stand der Technik zu schaffen.

Die Aufgabe wird gelöst durch ein Kabeltrassenelement zur Verwendung in einer unterirdischen Kabeltrasse gemäß Anspruch 1, einer Kabeltrasse zur Verlegung von Stromkabeln gemäß Anspruch 4, einem System mit einer solchen Kabeltrasse gemäß Anspruch 21, sowie einem Verfahren zum Betrieb einer Kabeltrasse gemäß Anspruch 24.

In einem Aspekt der vorliegenden Erfindung wird ein Kabeltrassenelement bereitgestellt zur Verwendung in einer unterirdischen Kabeltrasse. Das Kabeltrassenelement weist ein Wärmeleitelement auf zur Einbringung ins Erdreich und Weiterleitung der in den Stromkabeln entstehenden Wärme in das Erdreich und/oder zu einem Wärmetauschelement. Insbesondere ist das Wärmeleitelement flächig ausgebildet. Hierbei bezeichnet flächig die Eigenschaft des Wärmeleitelements eine große Fläche bereitzustellen im Vergleich zu der Mantelfläche eines einzelnen Stromkabels, welche dann mit dem Erdreich im Kontakt ist zur Ableitung der Wärme. Insbesondere ist das Wärmeleitelement im Wesentlichen plattenförmig ausgebildet und weist somit eine größere Breite und Länge auf als Dicke bzw. Wandstärke. Dabei kann das Wärmeleitelement als ebene Platte ausgebildet sein oder aber ein Profil aufweisen, wie es beispielsweise der Fall ist, wenn das Wärmeleitelement, wie weiter unten beschrieben, als Spundwand ausgebildet ist. Hierdurch wird eine große Kontaktfläche mit dem Erdreich bereitgestellt. Weiterhin weist das Kabeltrassenelement mehrere mit dem Wärmeleitelement verbundene Aufnahmeelemente auf jeweils zur Aufnahme eines oder mehrerer Stromkabel, wobei sich die Aufnahmeelemente zumindest abschnittsweise und insbesondere kontinuierlich entlang des Wärmeleitelemets erstrecken und in einem Abstand zueinander angeordnet sind. Wie weiter unten beschrieben, können durch die einzelnen Aufnahmeelemente jeweils ein oder mehrere Stromkabel aufgenommen werden, welche sodann mit dem Wärmeleitelement verbunden sind und insbesondere thermisch mit diesem gekoppelt sind. Wärme, welche in den Stromkabeln erzeugt wird, kann somit über die Aufnahmeelemente und das Wärmeleitelement an das Erdreich effizient abgegeben werden, so dass der Abstand der einzelnen Stromkabel zueinander verringert werden kann. Gleichzeitig bietet das Wärmeleitelement mechanischen Schutz für die Stromkabel, so dass Sicherheitsabstände insbesondere für Bebauung und/oder Bepflanzung mit tiefwurzelnden Pflanzen reduziert werden können.

Vorzugsweise ist das Wärmeleitelement ein metallisches Wärmeleitelement und insbesondere weist das Wärmeleitelement Stahl oder Aluminium auf bzw. besteht aus Stahl oder Aluminium. Alternativ weist das Wärmeleitelement Kunststoff aus oder besteht aus Kunststoff bzw. ist aus Kunststoff hergestellt. Insbesondere bei der Verwendung von wärmeleitendem Kunststoff wird einerseits eine gute Wärmeleitfähigkeit bereitgestellt, andererseits werden bei einer Verwendung in einer Wechselstromtrasse aufgrund der geringen elektrischen Leitfähigkeit von Kunststoffen allenfalls nur geringe Ströme im Wärmeleitelement induziert.

Vorzugsweise weist das Wärmeleitelement eine Wärmeleitung auf von mehr als 10 W/mK, insbesondere mehr als 30 W/mK und bevorzugt mehr als 50W/mK.

Vorzugsweise wird das Wärmeleitelement gebildet aus einem oder mehreren Spundwandprofilen. Insbesondere wird durch die Spundwandprofile eine Spundwand als Wärmeleitelement gebildet, über die einerseits ein mechanischer Schutz der Stromkabel und der Kabeltrasse gewährleistet ist und andererseits großflächig über die Fläche der Spundwand Wärme ans Erdreich abgegeben werden kann.

Dabei weist das Kabeltrassenelement vorzugsweise eine Vielzahl miteinander verbundener Spunwandprofile auf, welche im Boden verankert sind und mit den benachbarten Spundwandprofilen über die Spundwandschlösser kraftschlüssig verbunden sind. Hierbei sind die Spundwandprofile in bekannter Weise kontinuierlich nebeneinander angeordnet, sodass, bis auf das erste und letzte Spundwandprofil, jedes Spundwandprofil mit genau zwei benachbarten Spundwandprofilen verbunden ist. Zusätzlich können Ankerelemente und Gurtungen vorgesehen sein, welche statisch erforderlich werden und zur Lastabtragung in den angrenzenden Baugrund dienen. Alternativ oder zusätzlich können Spreizen und Steifen zur gegenseitigen Abstützung der Stahlspundwände im Falle eines Grabenverbaus zum Einsatz kommen. Die einzelnen Spundwandprofile bzw. vorgefertigten Kanalbauelemente werden dabei in das Erdreich nach anerkannten Regeln der Bautechnik eingebracht, wozu alle anerkannten Einbringverfahren, wie z.B. Pressen, Schlagen oder Einvibrieren, zur Anwendung kommen können. Bekannte Spundwandprofile weisen dabei Profillängen bis über 30m auf. Die Spundwandprofile bestehen dabei aus Stahl oder Aluminium, welches eine hohe Wärmeleitung insbesondere von ca. 52 W/mK aufweist. Die Spundwandprofile bzw. die daraus gebildete Spundwand erstrecken sich in Verlaufsrichtung der Kabeltrasse.

Vorzugsweise weist die Spundwand eines oder mehrere im vertikalen Abstand angeordnete Aufnahmeelemente auf, wobei die Aufnahmeelemente zur Aufnahme zumindest eines einzelnen oder mehrerer Stromkabel ausgebildet sind. Dabei bezieht sich die vertikale Anordnung auf den eingebauten Zustand, sodass bei Aufnahme von Stromkabeln durch die Aufnahmeelemente die Stromkabel übereinander entlang der Längsachse der Spundwand bzw. des Kanalbauelements, bestehend aus den einzelnen Spundwandprofilen, in Verlaufsrichtung der Kabeltrasse angeordnet sind. In anderen Worten sind die Aufnahmeelemente in vertikaler Richtung zur Längsachse des Kabeltrassenelements verteilt angeordnet. Dabei sind die jeweiligen Aufnahmeelemente zumindest abschnittsweise und insbesondere fortlaufend übereinander an den Spundwandprofilen in Verlaufsrichtung der Kabeltrasse angeordnet. Somit können mehrere Stromkabel von einer entsprechenden Anzahl von Aufnahmeelementen an der Spundwand befestigt und thermisch leitend verbunden werden, wobei die Stromkabel sodann nicht mehr horizontal nebeneinander angeordnet sind, wie es bei derzeitigen Verlegeverfahren bei Kabeltrassen der Fall ist. Vielmehr sind die Stromkabel übereinander angeordnet, sodass die Grabenbreite der Kabeltrasse, welche mit der Spundwand gebildet wird, und/oder die Aushubmassen deutlich reduziert und zugleich die Übertragungsleistung der Kabeltrassen deutlich erhöht werden kann. Gleichzeitig kann die anfallende Abwärme, welche von den Stromkabeln erzeugt wird, effizient durch die jeweiligen Spundwandprofile in das Erdreich abgeleitet werden. Hierbei wird durch die Spundwandprofile eine deutlich vergrößerte Kontaktfläche mit dem Erdreich geschaffen. Aufgrund der guten Wärmeleitfähigkeit der aus Metall bestehenden Spundwandprofile dienen diese als Wärmeleitelement, sodass die von den Stromkabeln erzeugte Wärme gleichmäßig über die Spundwandprofile der Spundwand abgeleitet werden kann und sodann großflächig und somit effizient an den Baugrund abgegeben werden kann. Hierdurch vergrößert sich die Kontaktfläche zwischen einem Stromkabel und dem Erdreich signifikant und insbesondere um einen Faktor 10 oder mehr.

Vorzugsweise wird das Wärmeleitelement durch ein Verbauelement gebildet, welches insbesondere ausgebildet ist als Tunnelbauelement oder Kanalbauelement. Somit kann durch eine Aneinanderreihung mehrerer dieser Verbauelemente auf einfache Weise ein erdfreier Kanal oder ein Tunnel gebildet werden, in dem die Stromkabel verlegt sind. Die Verbauelemente stellen somit Fertigteile dar, welche vorgefertigt ins Erdreich eingebracht werden können. Bei den Verbauelementen handelt es sich insbesondere um vorgefertigte Stahlteile wie beispielsweise einen Container, welche entlang der Kabel-trasse ins Erdreich eingebracht werden können zur Aufnahme der Stromkabel. Insbesondere wird durch die Container ein begehbarer Kanal geschaffen. Die Container können vorgefertigt sein, oder handelt sich um konventionelle Container. Hierbei sind das Wärmeleitelement und das Verbauelement integriert bzw. wird durch das Wärmeleitelement das Verbauelement gebildet. Das Wärmeleitelement hat somit eine Doppelfunktion, nämlich einerseits die aktive oder passive Wärmeregulierung der in den Stromkabeln entstehenden Wärme und andererseits gleichzeitig die strukturelle Sicherung des Kanals oder Tunnels gegen das Erdreich.

Das Verbauelement ist vorzugsweise ein Kanalbauelement bzw. Tunnelbauelement, das für die Aufnahme einer Vielzahl von Aufnahmeelementen geeignet ist. Es entspricht den statischen und thermischen Erfordernissen und wird insbesondere komplett aus Wärmeleitelementen gebildet, die bevorzugt Stahlprofile sind. Das Tunnelbauelement erfüllt den Zweck als Kabelkanal sowie als thermisch aktiviertes Wärmeleitelement. Ausgestattet mit einem soliden Stahlboden und/oder Stahlwänden als Wärmeleitelementen, ist es in der Lage zur passive und/oder aktiven Kühlung.

Vorzugsweise ist das Kabeltrassenelement weitergebildet anhand der Merkmale der Kabeltrasse wie nachfolgend beschrieben. Insbesondere kann das Kabeltrassenelement ein oder mehrere Wärmetauschelemente aufweisen, wie unten beschrieben. Alternativ oder zusätzlich hierzu kann das Kabeltrassenelement Aufnahmeelemente aufweisen, wie nachfolgend und insbesondere im Zusammenhang mit den Figuren näher erläutert.

In einem weiteren Aspekt der vorliegenden Erfindung wird eine Kabeltrasse zur unterirdischen Verlegung von Stromkabeln bereitgestellt. Die Kabeltrasse weist dabei mindestens ein insbesondere flächiges Wärmeleitelement auf, wobei mehrere Stromkabel in einem Abstand zueinander mit dem Wärmeleitelement verbunden und zur Ableitung von Wärme der jeweiligen Stromkabel an das Wärmeleitelement thermisch gekoppelt sind. Dabei sind das Wärmeleitelement und die Stromkabel im Erdreich angeordnet und zumindest das Wärmeleitelement ist zumindest teilweise in direktem Kontakt mit dem Erdreich. Wärme, welche durch die Stromkabel erzeugt wird, wird an das Wärmeleitelement übertragen und kann hierdurch über eine große Kontaktfläche an das Erdreich abgegeben werden. Die anfallende Abwärme aus dem Stromkabel kann somit effizienter abgeführt werden, sodass die Stromkabel dichter beieinanderliegen können, ohne dass die Gefahr besteht, dass eine zu starke Erwärmung des Erdreichs und/oder der Stromkabel eine Drosselung der Übertragungsleistung der Kabeltrasse erfordert. Zugleich kann die Breite der Kabeltrassen reduziert und eine effiziente und zuverlässige Wärmeabfuhr der Abwärme aus den Stromkabeln sichergestellt werden. Gleichzeitig kann durch das Wärmeleitelement ein mechanischer Schutz vor Beschädigung der Stromkabel gewährleistet werden. Das Wärmeleitelement hat somit eine Doppelfunktion, nämlich einerseits die Wärmeabfuhr der Abwärme aus den Stromkabeln sowie Schutz der Stromkabel im Erdreich und beim Verlegen der Stromkabel.

Vorzugsweise ist die Kabeltrasse als Hochspannungsgleichstromübertragungstrasse ausgebildet. Alternativ hierzu ist die Kabeltrasse ausgebildet als Wechselstromübertragungstrasse. Hierbei sind die Wärmeleitelemente insbesondere aus Kunststoff gefertigt, um Induktion eines Stroms im Wärmeleitelement zu verhindern.

Vorzugsweise handelt es sich bei den Stromkabeln um supraleitende Kabel. Solche Kabel müssen konstant bei einer tiefen Temperatur betrieben werden, um die supraleitenden Eigenschaften zu erhalten. Temperaturschwankungen durch die Umgebung dürfen sich hierbei nicht auf die supraleitenden Kabel auswirken, was im Extremfall zu einem Verlust der supraleitenden Eigenschaften führen könnte. Hierbei steigt der ohmische Widerstand der Stromkabel sprunghaft an, was zu einer hohen thermischen Belastung der Stromkabel führt. Durch die Verwendung eines Wärmeleitelements zur aktiven oder passiven Abfuhr von Wärme, kann der Kühlungsaufwand reduziert und insbesondere im Wesentlichen Konstant gehalten werden.

Vorzugsweise ist die Kabeltrasse zur Übertragung von 1 GW oder mehr, vorzugsweise 4 GW oder mehr und bevorzug 8 GW oder mehr ausgebildet, was mehr als dem doppelten Wert des aktuell in der Bauplanung befindlichen Südwestlinks (4 GW) entspricht.

Vorzugsweise werden die Stromkabel mit 525kV oder mehr betrieben, bevorzugt 600kV oder mehr.

Vorzugsweise erstreckt sich das mindestens eine Wärmeleitelement zumindest teilweise horizontal und insbesondere ausschließlich horizontal. Insbesondere ist das Wärmeleitelement horizontal angeordnet. Dabei sind die Stromkabel in einem horizontalen Abstand zueinander angeordnet. Durch das horizontale Anordnen der Stromkabel ist die konventionelle Bauweise in Form einer offenen Grabenbauweise weiter möglich. Jedoch wird durch das Vorsehen des Wärmeleitelements die Wärmeabfuhr durch die verbesserte Wärmeleitfähigkeit des Wärmeleitelements und die durch das Wärmeleitelement vergrößerte Fläche, welche mit dem Erdreich in Kontakt ist zur Abgabe der Wärme, stark verbessert.

Alternativ oder zusätzlich hierzu erstreckt sich das mindestens eine Wärmeleitelement vertikal und insbesondere ausschließlich vertikal. Insbesondere ist das Wärmeleitelement vertikal angeordnet. Hierdurch kann die Breite der erforderlichen Kabeltrasse deutlich reduziert werden, da die einzelnen Stromkabel in einen vertikalen Abstand zueinander untereinander bzw. übereinander angeordnet werden können.

Vorzugsweise weist die Kabeltrasse ein oder mehrere Kabeltrassenelemente auf, wie vorstehend beschrieben. Insbesondere weist die Kabeltrasse ein oder mehrere Wärmeleitelemente auf zur Einbringung ins Erdreich und Weiterleitung der in den Stromkabeln entstehenden Wärme in das Erdreich und/oder zu einem Wärmetauschelement, sowie mehreren mit dem Wärmeleitelement verbundenen Aufnahmeelementen jeweils zur Aufnahme einer oder mehrerer Stromkabel, wobei sich die Aufnahmeelemente zumindest abschnittsweise und insbesondere kontinuierlich entlang des Wärmeleitelemets erstrecken und in einem Ab-stand zueinander angeordnet sind.

Vorzugsweise ist das Wärmeleitelement durch eine Spundwand wie vorstehend geschrieben gebildet, wobei die Stromkabel in den Aufnahmeelementen angeordnet sind. Durch das Vorsehen der Spundwand wird ebenfalls ein mechanischer Schutz der Stromkabel geschaffen, so dass Sicherheitsabstände für die Bebauung und/oder Bepflanzung verringert werden können, wodurch die erforderliche Trassenbreite weiter reduziert werden kann.

Vorzugsweise ist das Wärmeleitelement durch ein Verbauelement wie vorstehend beschrieben gebildet, wobei es sich bei dem Verbauelement insbesondere um ein Tunnelverbauelement oder ein Grabenverbauelement handelt.

Vorzugsweise sind alle Stromkabel auf einer Seite des Wärmeleitelements angeordnet. Alternativ hierzu können die Stromkabel auf beiden Seiten des mindestens einen Wärmeleitelements angeordnet sein, wodurch die Anzahl der möglichen Stromkabel erhöht werden kann, ohne eine zu große Tiefe zu erreichen.

Vorzugsweise ist das Wärmeleitelement ein metallisches Wärmeleitelement und insbesondere weist das Wärmeleitelement Stahl oder Aluminium auf bzw. besteht aus Stahl oder Aluminium. Alternativ weist das Wärmeleitelement Kunststoff auf oder besteht aus Kunststoff bzw. ist aus Kunststoff hergestellt. Insbesondere bei der Verwendung von Kunststoff wird einerseits eine gute Wärmeleitfähigkeit bereitgestellt, andererseits werden bei Verwendung in einer Wechselstromtrasse keine Ströme im Wärmeleitelement induziert.

Vorzugsweise weist das Wärmeleitelement eine Wärmeleitung auf von mehr als 10 W/mK, insbesondere mehr als 30 W/mK und bevorzugt mehr als 50W/mK.

Vorzugsweise erstreckt sich das Wärmeleitelement abschnittsweise entlang der Kabeltrasse und insbesondere erstreckt sich das Wärmeleitelement kontinuierlich entlang der Kabeltrasse.

Vorzugsweise ist der vertikale Abstand zwischen den Stromkabeln konstant. Alternative hierzu variiert der Abstand der Stromkabel in vertikaler Richtung entsprechend der Möglichkeit des Erdreichs die erzeugte Wärme der jeweiligen Stromkabel abzuführen. So können beispielsweise weiter oben angeordnete Stromkabel weiter auseinander angeordnet sein als weiter unten angeordnete Stromkabel, da eine Wärmeableitung in das tiefer gelegene Erdreich effizienter erfolgen kann. Insbesondere kann das Wärmeleitelement, falls es als Spundwand ausgebildet ist, eine größere Fläche aufweisen als für die Anordnung der Aufnahmeelemente und Montage der Stromkabel beansprucht wird, da statisch zur Lastabtragung der Spundwandprofile in das Erdreich diese tiefer in das Erdreich einbinden, sodass die jeweiligen Spundwandprofile eine nochmals größere Fläche in Kontakt mit dem tieferen Erdreich aufweisen.

Vorzugsweise sind mehrere Wärmeleitelemente vertikal in einem horizontalen Abstand zueinander angeordnet, wobei mit jedem Wärmeleitelement mehrere Stromkabel verbunden sind. Somit können eine ausreichende Anzahl an Stromkabel mit jeweiligen Wärmeleitelementen vorgesehen werden, um eine effiziente Kabeltrasse bereitzustellen.

Vorzugsweise sind die Wärmeleitelemente als Spundwandprofile und insbesondere als Stahlprofile ausgebildet wie vorstehend beschrieben, die dann insbesondere als Grabenverbau aus Spundwandprofilen sich gegenüberstehend angeordnet sind. Hierbei weisen insbesondere die Aufnahmeelemente der jeweiligen Spundwände zueinander. Weiterhin können sich die Spundwände zur Erhöhung der statischen Lastaufnahmen und/oder der Verringerung der Einbindetiefen sowie der Widerstandswerte der einzelnen Spundwandprofile sich mechanischen gegeneinander abstützen.

Vorzugsweise wird durch das mindestens eine Wärmeleitelement und insbesondere die Vielzahl an Wärmeleitelementen ein Kanal oder ein Graben gebildet.

Hierbei können die Wärmeleitelemente als Kanalverbau oder Grabenverbau ausgebildet sein und somit dient das eine oder die mehreren Wärmeleitelemente gleichzeitig zur Abgrenzung bzw. Schutz des Kanals oder Grabens vom Erdreich.

Vorzugsweise ist zwischen mindestens zwei Wärmeleitelementen ein erdfreier und insbesondere begehbarer Kanal gebildet, in dem die Stromkabel angeordnet sind, wobei die Wärmeleitelemente auf der dem Kanal gegenüberliegenden Seite an das Erdreich angrenzen. Insbesondere sind alle Stromkabel innerhalb des Kanals angeordnet. Somit wird durch den Grabenverbau insbesondere aus Spundwänden ein Servicekanal gebildet, in dem die Aufnahmeelemente und die Stromkabel an der Spundwand montiert werden können. Insbesondere ist dieser Kanal ausreichend groß, um begehbar, optional befahrbar zu sein, was die Verlegung der Stromkabel, deren Instandhaltung oder Austausch erheblich vereinfacht.

Vorzugsweise beträgt der horizontale Abstand zwischen den zwei Wärmelementen zwischen 1m und 10m und bevorzugt zwischen 2m und 3m. Durch die beiden Wärmeleitelemente, insbesondere falls diese als Spundwände vorgesehen sind, wird ebenfalls ein technischer Schutz der Stromkabel geschaffen, so dass der seitliche Sicherheitsabstand für eine Bebauung und/oder Bepflanzung weiter reduziert werden kann.

Vorzugsweise beträgt die Höhe des Kanals 2m - 8m und vorzugsweise zwischen 3m - 5m.

Vorzugsweise weist die Kabeltrasse mindestens 2 Stromkabel auf, insbesondere mehr als 4 und bevorzugt mehr als 8 Stromkabel. Insbesondere bei Vorsehen von mehr als einem Wärmeleitelement sind mit jedem Wärmeleitelement 2 oder mehr, bevorzugt 3 oder mehr und besonderes bevorzugt 4 oder mehr Stromkabel verbunden.

Vorzugsweise beträgt der vertikale Abstand zwischen zwei benachbarten Stromkabeln mehr als 50cm, insbesondere mehr als 75cm und bevorzugt mehr als 100cm. Hierdurch wird ein ausreichender Abstand geschaffen, so dass eine gegenseitige thermische Beeinflussung der einzelnen Stromkabel zumindest reduziert wird.

Vorzugsweise beträgt der vertikale Abstand zwischen zwei benachbarten Stromkabeln weniger als 150cm, insbesondere weniger als 75cm und bevorzugt weniger als 50cm. Hierdurch kann der Platzbedarf für die Stromtrasse reduziert werden bei gleichzeitiger Maximierung der Übertragungsleistung, da mehr Stromkabel auf kleinerer Fläche verlegt werden können.

Vorzugsweise weist die Kabeltrasse eine Breite auf von weniger als 10m, insbesondere weniger als 5m und bevorzugt weniger als 3m. Somit wird eine platzsparende Kabeltrasse geschaffen, die effizient gekühlt und damit zuverlässig betrieben werden kann.

Vorzugsweise weist der Kanal eine Abdeckung auf. Insbesondere ist diese Abdeckung als Fahrbahnoberfläche ausgebildet, welche sich auf den oberen Rändern der jeweiligen Wärmeleitelemente, die bevorzugt als statisch hoch belastbare Spundwandprofile bzw. Spundwand ausgebildet ist, abstützen. Somit wird einerseits auf einfache Weise ein begehbarer Kabelkanal bereitgestellt und andererseits auf einfache Weise die Möglichkeit einer Befahrbarkeit der Kabeltrasse während der Bauphase der Kabeltrasse gewährleistet und nach Fertigstellung zur Nutzung als Fahrweg. Somit ist es möglich, eine Kabeltrasse beispielsweise unterhalb einer Straße zu verlegen, wodurch eine Doppelnutzung der Kabeltrasse ermöglicht wird und der Bedarf an weiterem Platz für eine gesonderte Kabeltrasse oder eine gesonderte Straße entfällt.

Vorzugsweise dient der unterirdische kanall zwischen den beiden parallel verlaufenden Kabeltrassenelementen zur Integration von weiteren Leitungen. Beispiele hierfür sind Wasserstoff, der in Zukunft auf Offshore-Windplattformen erzeugt wird und vom Meer ins Landesinnere transportiert werden muss, sowie Leitungen für CO2, welches in Zukunft über Carbon Capture Techniken im Landesinneren beim Verbrennen von fossilen oder grünen Energieträgern aufgefangenen und zurück zum Meer transportiert werden muss, um es dort z.B. in ausgedienten Öl- oder Gasfeldern zu speichern.

Vorzugsweise ist der Kanal belüftet und insbesondere zwangsbelüftet. Durch die konvektive Kühlung der Stromkabel, welche innerhalb des Kanals angeordnet sind, kann eine weitere Wärmeabfuhr zusätzlich zu der Wärmeleitung über die Wärmeleitelemente geschaffen werden. Die Wärmeabfuhr der durch die Stromkabel erzeugten Wärme kann hierdurch verbessert werden.

Vorzugsweise wird die Abluft über einen Wärmetauscher an das über dem Tunnel befindliche Erdreich abgegeben, welches somit erwärmt wird und zur Ertragssteigerung bei landwirtschaftlicher Nutzung führt bzw. eine frühere Ernte zulässt.

Vorzugsweise sind die jeweiligen Stromkabel in den Aufnahmeelementen angeordnet, wobei jedes Stromkabel insbesondere von drei Seiten von dem Aufnahmeelement und/oder dem Wärmeleitelement umgeben ist. Somit werden durch die Aufnahmeelemente und das Wärmeleitelement U-förmige Konsolen geschaffen, in die die Stromkabel eingelegt werden können. Die Aufnahmeelemente sind dabei mittelbar oder unmittelbar mit den Wärmeleitelementen verbunden, sodass auch ein Wärmeübertrag von den Aufnahmeelementen an das Wärmeleitelement ermöglicht wird. Da die jeweiligen Stromkabel von drei Seiten von dem Aufnahmeelement und/oder dem Wärmeleitelement umgeben sind, kann effektiv Wärme abgeleitet werden auf das Wärmeleitelement und sodann ins Erdreich.

Vorzugsweise weisen die Aufnahmeelemente Stahl auf oder bestehen aus Strahl bzw. sind aus Stahl hergestellt. Alternativ hierzu kann auch das Aufnahmeelement aus Kunststoff ausgebildet sein.

Vorzugsweise sind die Aufnahmeelemente stoffschlüssig zum Beispiel mittels Schweißen mit dem jeweiligen Wärmeleitelement nicht lösbar verbunden.

Vorzugsweise erfolgt eine thermische Kopplung zwischen dem jeweiligen Stromkabel und dem Aufnahmeelement bzw. dem Wärmeleitelement. Hierbei kann beispielsweise ein Wärmeleitmittel wie beispielsweise Graphit oder eine andere wärmeleitende Vergussmasse in die Aufnahmeelemente eingebracht werden, sodass die jeweiligen Stromkabel im Wesentlichen vollständig jedoch zumindest teilweise von diesem Wärmeleitmittel umgeben sind und ein vollflächiger Kontakt mit dem Aufnahmeelement bzw. dem Wärmeleitelement gegeben ist. Alternativ hierzu kann das Wärmeleitmittel auch lediglich zwischen dem jeweiligen Stromkabel und der Seite des Wärmeleitelementes vorgesehen sein, sodass das Stromkabel im Wesentlichen auf dem Aufnahmeelement aufliegt und unmittelbar gekoppelt ist mit der Seite des Wärmeleitelements. Sollte ein Wärmetauschelement vorgesehen sein, wie unten im Detail beschrieben, kann eine thermische Kopplung unmittelbar mit dem Wärmetauschelement erfolgen.

Vorzugsweise weisen die Stromkabel kein Kabelschutzrohr auf. Stromkabel für die Hochspannungsübertragung gem. Stand der Technik werden üblicherweise in einem Kunststoffrohr verlegt, um einerseits Beschädigung des Stromkabels zu vermeiden und andererseits die Austauschbarkeit der Kabel im Erdreich im Reparaturfall zu gewährleisten. Ein solches Kabelschutzrohr stellt aufgrund der Luftschicht zwischen dem Stromkabel und dem Kabelschutzrohr einen thermischen Widerstand dar und reduziert die Wärmeabgabe der Stromkabel an das Erdreich weiter, weswegen der Kabelabstand vergrößert werden muss. Solche Kabelschutzrohre sind jedoch nicht erforderlich bei der Kabeltrasse der vorliegenden Erfindung, sodass ein Kabelschutzrohr entfallen kann. Hierdurch ist eine unmittelbare thermische Kopplung des Stromkabels mit dem Wärmeleitelement möglich.

Vorzugsweise weist die Kabeltrasse eine Bewässerungsvorrichtung auf, welche es ermöglicht, das Erdreich neben den Wärmeleitelementen bzw. neben den Spundwandprofilen gezielt zu befeuchten. Durch die Bewässerung kann die Wärmeleitfähigkeit des Erdreichs von z.B. von 0,3 W/mK bei geringem Feuchtegehalt auf z.B. 2 W/mK bei hohem Feuchtegehalt angehoben werden. Somit kann über die Bewässerung die Wärmeabfuhr in das Erdreich verbessert werden, wodurch es z.B. möglich wird, die Stromtrasse, wenn viel Strom benötigt wird, mit höherer Leistung zu betreiben.

Vorzugsweise weisen nebeneinanderliegende Stromkabel eine entgegensetzte Polarität auf. Hierdurch kompensieren sich die durch den Stromfluss erzeugten magnetischen Felder, sodass an der Oberfläche das durch die Kabeltrasse erzeugte magnetische Feld minimal ist.

Vorzugsweise weist die Kabeltrasse eine Abschirmvorrichtung zur Minimierung der elektromagnetischen Flussdichte an der Erdoberfläche auf. Hierbei kann die Abschirmvorrichtung als Metallplatte ausgebildet sein, welche insbesondere den erdfreien Kanal abdeckt. Somit wird durch die Abschirmvorrichtung und die beiden Wärmeleitelemente ein zu drei Seiten geschlossener Faraday'scher Käfig geschaffen, sodass die elektromagnetische Feldstärke an der Erdoberfläche zur Einhaltung einer möglichen elektromagnetischen Verträglichkeit mit anderen elektrischen Geräten wie beispielsweise Elektroautos minimal ist.

Vorzugsweise weist die Kabeltrasse ein oder mehrere Wärmetauschelemente auf zur Aufnahme der Wärme der Stromkabel und Weiterleitung mittels eines

Wärmeträgermediums. Hierzu steht das Wärmetauschelement jeweils mit einem oder mehreren Stromkabeln in zumindest indirektem thermischen Kontakt. Insbesondere ist das Wärmetauschelement im unmittelbaren Kontakt mit einem oder mehreren Stromkabeln. Vorzugsweise ist ein Wärmetauschelement in Kontakt mit allen Stromkabeln, welche mit einem der Wärmeleitelemente verbunden ist. Somit ist insbesondere genau ein Wärmetauschelement pro Wärmeleitelement vorgesehen. Alternativ hierzu kann für jedes Stromkabel genau ein Wärmetauschelement vorgesehen sein. Durch das Wärmetauschelement kann Wärme aktiv abgeführt werden, wodurch die Effizienz der Wärmeableitung, welche durch die Stromkabel entsteht, weiter erhöht wird. Somit wird einerseits Wärme der Stromkabel durch das Wärmeleitelement effizient an das Erdreich abgegeben. Bevorzugt kann die Wärme durch das Wärmetauschelement nutzbar gemacht werden. Wie vorstehend dargelegt entsteht bei der Übertragung von Strom für das Beispiel einer 4GW Kabeltrasse etwa 200kW/km an Wärmeleistung, welche durch das Wärmetauschelement aufgenommen und nutzbar gemacht werden kann.

Vorzugsweise sind die Wärmeleitelemente mit Kollektoren bestückt, in denen ein zirkulierendes Wärmeträgermedium zum Einsatz kommt, sodass die Kabel außer passiv auch aktiv gekühlt werden können. Die dabei zurückgewonnene Abwärme aus der Kabeltrasse kann optional über Wärmenetze zu Heizzwecken für die Gebäudeheizung mittels Wärmepumpen genutzt werden.

Vorzugsweise ist hierzu das Wärmeleitelement als thermisch aktivierte Spundwand ausgebildet. Dies ist beispielsweise beschrieben in DE 50 2010 008 643.9 - "Vorrichtung und Verfahren zur Wärmegewinnung aus der Umgebung" und DE 10 2020 106 331.8 - "Thermisch aktives Spundwandschlossprofil".

Vorzugsweise bestehen die Wärmeleitelemente aus thermisch aktivierten Stahlspundwänden, deren Kollektoren mit Zirkulations- oder Wärmepumpen gekoppelt sind und in denen ein Wärmeträgermedium zirkuliert.

Vorzugsweise handelt es sich bei dem Wärmetauschelement um einen Wärmetauscher, bei dem ein Wärmeträgermedium verwendet wird, welches das Wärmetauschelement durchströmt und hierbei Wärme der jeweiligen Stromkabel aufnimmt und weiterleitet. Bei dem Wärmeträgermedium kann es sich beispielsweise um Wasser, eine andere Flüssigkeit oder ein Gas handeln. Alternativ hierzu handelt es sich bei dem Wärmetauschelement um ein Wärmerohr, wobei als Wärmeträgermedium beispielsweise CO₂ verwendet wird, welches in seinem Verdampfungsbereich Wärme aufnimmt und im Kondensationsbereich Wärme an ein weiteres oder anderes Wärmeübertragungsmedium abgibt. Insbesondere können dabei die Wärmetauschelemente kombiniert werden, sodass beispielsweise Wärmerohre vorgesehen sind, welche mit den jeweiligen Stromkabeln in Kontakt stehen, wobei die Wärmerohre ihre Wärme an einen Wärmetauscher mit Wasser als Wärmeträgermedium abgeben zur Übertragung.

Vorzugsweise ist das Wärmetauschelement zwischen den Stromkabeln und dem Wärmeleitelement angeordnet. Hierdurch wird sichergestellt, dass möglichst viel Wärme durch das Wärmetauschelement aufgenommen werden kann und nutzbar gemacht wird. Lediglich die Wärme, welche nicht von dem Wärmetauschelement aufgenommen wird, kann über das Wärmeleitelement, wie vorstehend beschrieben, an das Erdreich abgegeben werden. Somit ist eine effiziente Wärmeabfuhr auch sichergestellt, sofern durch das Wärmetauschelement keine Wärme entnommen wird, beispielsweise aufgrund eines fehlenden Bedarfs an Wärme. Alternativ hierzu ist das Wärmetauschelement auf der den Stromkabeln gegenüberliegenden Seite des Wärmeleitelements angeordnet.

Vorzugsweise ist das mindestens eine Wärmetauschelement als Abdeckung ausgebildet, welche jeweils ein oder mehrere Stromkabel und insbesondere alle Stromkabel, welche in einem Aufnahmeelement angeordnet sind, zumindest teilweise umgibt, sodass zwischen der Abdeckung und dem jeweiligen Stromkabei ein Wärmeträgermedium strömen kann. Durch die Abdeckung wird insbesondere in Kombination mit dem Aufnahmeelement somit ein Kanal geschaffen, innerhalb dem das Stromkabel verlegt wird und gleichzeitig ein Wärmeträgermedium entlang dem Stromkabel strömen kann. Bei dem Wärmeträgermedium kann es sich beispielsweise um Wasser oder Luft handeln. Andere Flüssigkeiten oder Gase sind ebenfalls möglich. Somit wird durch das strömende Wärmeträgermedium die Wärme der Stromkabel aufgenommen und kann weitergeleitet und für verschiedene Anwendungen nutzbar gemacht werden.

Vorzugsweise ist das mindesten eine Wärmetauschelement zumindest abschnittweise entlang der Stromkabel in dem jeweiligen Aufnahmeelement angeordnet. Somit kann für jedes Aufnahmeelement jeweils ein Wärmetauschelement vorgesehen sein Alternativ hierzu können in einem Aufnahmeelement mehr als ein solches Wärmetauschelement vorgesehen sein. Insbesondere ist dabei das Wärmetauschelement als Hohlkörper zum Beispiel in Form eines Rohres ausgebildet, welches ein Wärmeträgermedium führt. Somit strömt das Wärmeträgermedium parallel zu den Stromkabeln, ist jedoch von diesen durch die Wandung des Hohlkörpers getrennt, so dass die Stromkabel nicht mit dem Wärmeträgermedium in Kontakt kommen. Um eine gute thermische Kopplung zwischen den jeweiligen Stromkabeln und dem Wärmeträgermedium zu erreichen, kann das Rohr der Hohlkörper plastisch verformbar sein und hierdurch direkt an einem oder mehreren Stromkabeln formschlüssig anliegen. Insbesondere liegt der plastisch verformbare Hohlkörper an allen Stromkabeln eines Aufnahmeelements direkt an. Alternativ oder zusätzlich hierzu kann zwischen dem Hohlkörper und den jeweiligen Stromkabeln ein Wärmeleitmittel vorgesehen sein, so dass dieser mit einem oder mehreren Stromkabeln thermisch miteinander gekoppelt ist. Hierbei kann der Hohlkörper auch rund im Querschnitt ausgebildet sein. Insbesondere können die vorstehenden Wärmetauschelemente kombiniert sein mit den Wärmetauschelementen, die mit dem Wärmeleitelement verbunden sind.

Vorzugsweise sind alle Wärmetauschelemente gleich ausgebildet oder mindestens zwei der Wärmetauschelemente sind unterschiedlich ausgebildet.

Vorzugsweise ist eine Verbindungsleitung entlang der Kabeltrasse zur Weiterleitung eines Wärmeträgermediums an ein Verbraucher und/oder einen Wärmespeicher vorgesehen. Dies kann z.B. über ein Wärmenetz erfolgen, welches bevorzugt als Niedertemperaturwärmenetz ausgebildet ist. Insbesondere ist die Verbindungsleitung im erdfreien Kanal vorgesehen und somit einfach und im Gegensatz zum Stand der Technik kostengünstig verlegbar, leicht zugänglich und muss zudem wegen der erhöhten Temperaturen im erdfreien Kanal auch nicht isoliert werden. Hierbei ist die Verbindungsleitung mit einem Verbraucher wie beispielsweise Personenhaushalten oder der Industrie verbunden, welche die erzeugte Wärme der Kabeltrasse nutzen können. Alternativ hierzu oder zusätzlich ist die Verbindungsleitung mit einem Wärmespeicher verbunden, welcher beispielsweise als saisonaler Wärmespeicher ausgebildet sein kann. Nicht benötigte Wärme kann somit im Wärmespeicher zwischengespeichert werden bis ein Bedarf vorliegt, welche die durch die Kabeltrasse erzeugte Wärme übersteigt. In diesem Fall kann Wärme aus dem Wärmespeicher zur Verfügung gestellt und nutzbar gemacht werden. Bei dem Wärmespeicher handelt es sich beispielsweise um ein Wärmespeichermedium wie beispielsweise Wasser, Zeolith, Gestein oder dergleichen. Aufgrund der Verfügbarkeit und hohen Wärmekapazität dieser Materialien kann eine große Menge an Wärme gespeichert und bei Bedarf an die jeweiligen Verbraucher bereitgestellt werden. Somit kann beispielsweise im Sommer die Wärme der Kabeltrasse im saisonalen Wärmespeicher gespeichert werden, da wenig Wärme bei Verbrauchern benötigt wird. Im Winter besteht für Heizzwecke ein erhöhter Wärmebedarf, welche sodann aus dem saisonalen Wärmespeicher gedeckt werden kann.

In einem weiteren Aspekt der vorliegenden Erfindung wird ein System bereitgestellt mit einer Kabeltrasse wie vorstehend beschrieben.

Vorzugsweise weist das System eine Wärmepumpe und/oder einen Wärmetauscher auf. Insbesondere sind dabei Wärmepumpe bzw. Wärmetauscher verbunden mit den Wärmetauschelementen der Kabeltrasse, so dass die von dem Wärmeträgermedium übertragene Wärme von der Wärmepumpe bzw. dem Wärmetauscher genutzt werden kann.

Vorzugsweise ist die Kabeltrasse verbundenen mit einem Wärmenetz und/oder Wärmespeicher. Insbesondere ist das Wärmenetz bzw. der Wärmespeicher verbunden mit der Kabeltrasse mittels der Wärmepumpe und/oder des Wärmetausches.

In einem weiteren Aspekt der vorliegenden Erfindung wird ein Verfahren zum Betrieb einer Kabeltrasse und insbesondere eines Systems, wie vorstehend beschrieben, bereitgestellt, wobei die Kabeltrasse insbesondere ein Wärmetauschelement aufweist wie vorstehend beschrieben, sodass die in den Stromkabeln erzeugte Wärme mittels dem Wärmeträgermedium abgeführt werden kann.

Vorzugsweise wird die Kabeltrasse durch das eine oder die mehreren Wärmetauschelemente aktiv gekühlt. Somit wird der Trasse schon Wärme entzogen, bevor diese zusätzliche Wärme beispielsweise durch eine erhöhte übertragene Leistung der Kabeltrasse bzw. eine Leistungsspitze entsteht. Somit kann das System bei einer im Wesentlichen konstanten Temperatur betrieben werden. Temperaturschwankungen können minimiert werden, was zu einer höheren Effizienz des Systems führt.

Vorzugsweise wird bei einem Wärmebedarf, der kleiner ist als die erzeugte Wärme der Stromkabel, die Wärme in einem Wärmespeicher gespeichert.

Vorzugsweise wird bei einem Wärmebedarf, der größer ist als die erzeugte Wärme der Stromkabel, Wärme aus dem Speicher entnommen. Somit steht stets genug Wärme zur Verfügung für jeweilige Verbraucher und eine ganzjährige Nutzung der durch die Stromkabel erzeugten Wärme wird ermöglicht.

Nachfolgend wird die Erfindung anhand bevorzugter Ausführungsformen unter Bezugnahme auf die beigefügten Figuren näher erläutert.

Es zeigen:
Figur 1A eine Spundwand als Kabeltrassenelement gemäß der vorliegenden Erfindung in Draufsicht,
Figur 1B die Spundwand der Figur 1A in Seitenansicht,
Figur 1C die Spundwand der Figur 1A in Schnittansicht,
Figur 2 eine Kabeltrasse in einer ersten Ausführungsform,
Figur 3A bis 3C Detailansichten der Kabeltrasse gemäß der vorliegenden Erfindung,
Figuren 4A-4F Detailansichten einer Kabeltrasse gemäß der vorliegenden Erfindung,
Figur 5 eine weitere Ausführungsform einer Kabeltrasse gemäß der vorliegenden Erfindung und
Figur 6 ein schematisches Diagramm zum Betrieb eines Systems mit einer Kabeltrasse und einem Wärmenetz gemäß der vorliegenden Erfindung.

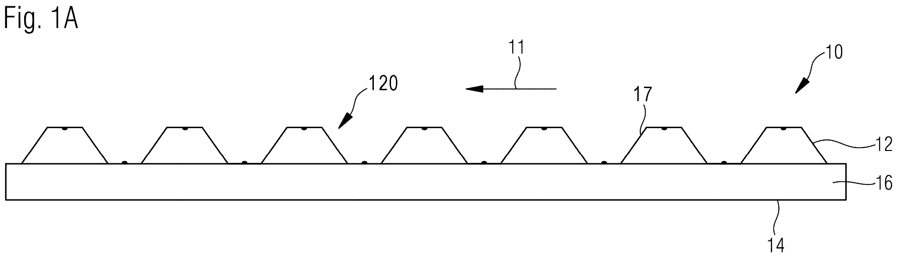

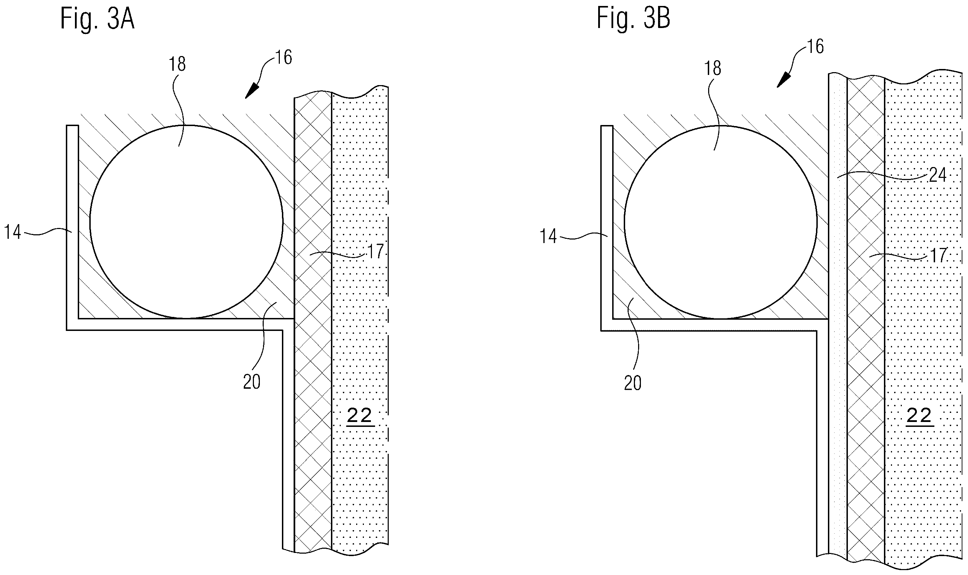

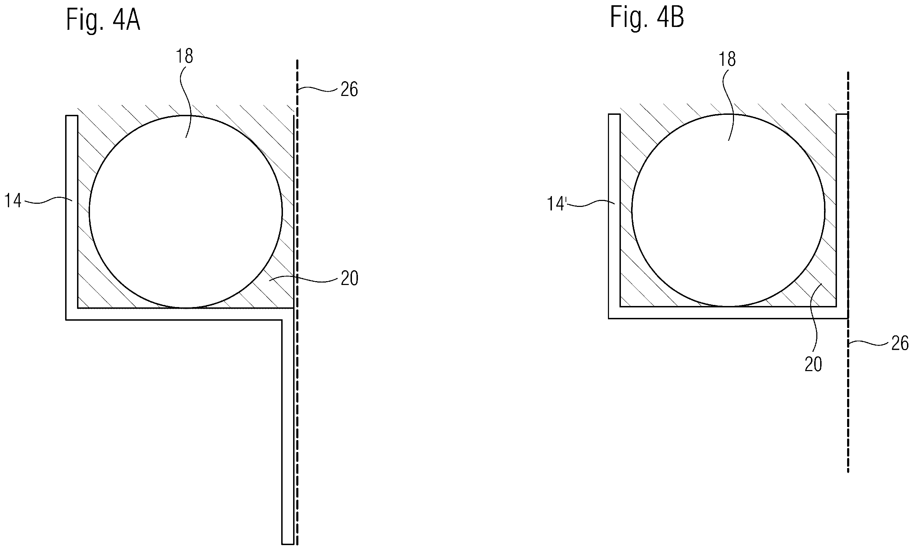

Figur 1A zeigt ein Kabeltrassenelement 10, welches ein Wärmeleitelement 17 aufweist, insbesondere ausgebildet als Spundwand 120. Die Spundwand 120 weist eine Vielzahl miteinander verbundenen Spundwandprofilen 12 auf, welche sich in eine Verlaufsrichtung 11 der Kabeltrasse erstrecken können. Hierbei sind die jeweiligen Spundwandprofile 12 über die Spundwandschlösser unmittelbar mit ihren benachbarten Spundwandprofilen verbunden, sodass eine geschlossene Spundwand 120 entsteht. Weiter weist das Kabeltrassenelement 10 eine oder mehrere Aufnahmeelemente 14 auf. Hierbei sind die ein oder mehreren Aufnahmeelemente 14 mit den einzelnen Spundwandprofilen 12 verbunden und erstrecken sich zumindest abschnittsweise und insbesondere kontinuierlich entlang der Verlaufsrichtung 11 der Spundwand 120, insbesondere entlang der Längsachse des mit der Spundwand 120 gesicherten Kabelkanals. Die Aufnahmeelemente 14 sind im Detail beschrieben in Bezug auf die Figuren 3A-3C und 4A-4D. Die Aufnahmeelemente 14 sind dabei ausgebildet zur Aufnahme jeweils eines oder mehrerer Stromkabel 18, welche in den jeweiligen Ausnehmungen 16 der Aufnahmeelemente 14, ausgebildet als Konsole, verlaufen und gehalten werden. Die Aufnahmeelemente 14 sind dabei unmittelbar verbunden mit den Spundwandprofilen 12.

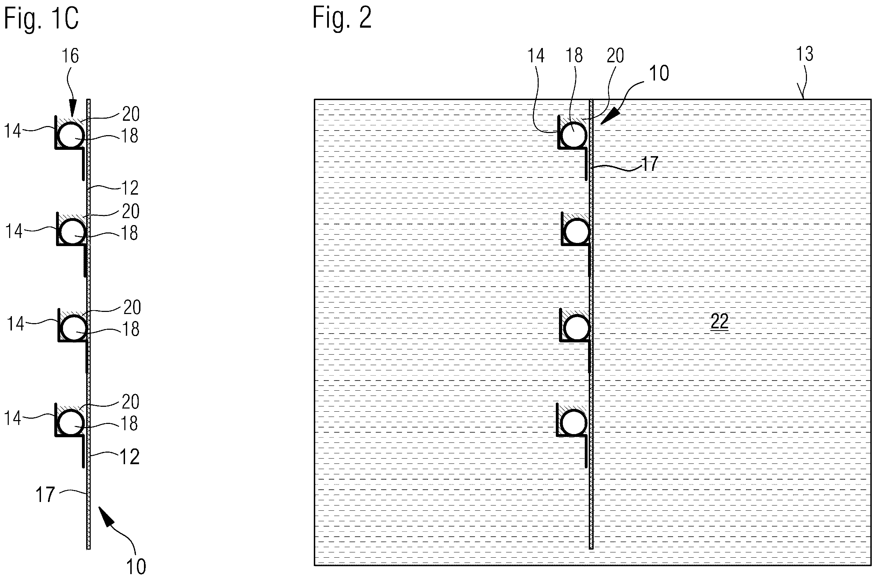

Wie in der Ausführungsform der Figur 1C gezeigt, sind mit den jeweiligen und insbesondere allen Spundwandprofilen 12 der Spundwand 120 vier Aufnahmeelemente 14 verbunden, welche sodann vier oder mehr Stromkabel 18 tragen können. Hierbei ist die vorliegende Erfindung selbstverständlich nicht auf die Anzahl der dargestellten Aufnahmeelemente 14 und Stromkabel 18 beschränkt, sodass weitere oder wenige Aufnahmeelemente 14 und Stromkabel 18 entsprechend vorgesehen sein können.

Im nachfolgenden wird Bezug genommen auf die Figur 2, welche eine Kabeltrasse gemäß der vorliegenden Erfindung darstellt. Hierbei ist ein Wärmeleitelement 17 vertikal angeordnet. Die Stromkabel 18 sind über die Aufnahmeelemente 14 unmittelbar verbunden mit dem Wärmeleitelement 17, welches als Spundwandprofil 12 gemäß den Figuren 1A bis 1C ausgebildet sein kann. Das Wärmeleitelement 17 ist zusammen mit den Aufnahmeelementen 14 und den Stromkabeln 18 im Erdreich 22 unter der Erdoberfläche 13 angeordnet. Das Wärmeleitelement 17 ist dabei insbesondere hergestellt aus Stahl und weist somit intrinsisch eine gute Wärmeleitfähigkeit auf im Vergleich zur Wärmeleitfähigkeit des Erdreichs 22. Durch das Wärmeleitelement 17 ist eine gleichmäßigere Wärmableitung der durch die Stromkabel 18 erzeugten Wärme in das Erdreich 22 ermöglicht durch die vergrößerte Kontaktfläche. Der Wärmeabfluss aus den Stromkabeln 18 in das Erdreich ist höher und insbesondere gleichmäßiger, wodurch Temperaturspitzen in den Stromkabeln 18 und im Erdreich vermieden werden und ein Betrieb der Kabeltrasse mit gleichbleibend hoher oder auch höherer Leistung ermöglicht wird.

Auch wenn der vertikale Abstand der einzelnen Aufnahmeelemente 14 und der Stromkabel 18 in der Figur 2 konstant dargestellt ist, kann hiervon abgewichen werden, sodass ein sich verändernder vertikaler Abstand zwischen zwei aufeinander folgenden Stromkabeln 18 ebenfalls von der vorliegenden Erfindung mit umfasst ist. Weiterhin ist in der Figur 2 dargestellt, dass alle Aufnahmeelemente 14 identisch ausgebildet sind. Auch hiervon kann abgewichen werden, sodass unterschiedliche Aufnahmeelemente 14 ebenfalls von der vorliegenden Erfindung mitumfasst werden.

Nachfolgend wird Bezug genommen auf die Figuren 3A bis 3C. In der Figur 3A ist das Aufnahmeelement 14 unmittelbar mit dem Wärmeleitelement 17 verbunden. Zur besseren thermischen Kopplung des Stromkabels 18 mit dem Wärmeleitelement 17 kann hierzu in die Ausnehmung 16, gebildet durch das Aufnahmeelement 14, ein Wärmeleitmittel 20 eingebracht werden, welches beispielsweise als Vergussmasse oder Schüttgut bereitgestellt wird. Insbesondere ist das Wärmeleitmittel 20 Graphit oder weist Graphit auf. Somit wird eine gute Wärmeleitung über den gesamten Umfang des Stromkabels 18 an das Wärmeleitelement 17 gewährleistet, wodurch die vom Stromkabel 18 abgeführte Wärmemenge maximiert wird. Dadurch können entweder die Kabeltemperatur und damit die Verluste abgesenkt und/oder die Leistung der Trasse erhöht werden.

In einer weiteren Ausführungsform, gezeigt in der Figur 3B, ist ein Wärmetauschelement 24 zwischen dem Stromkabel 18 und dem Wärmeleitelement 17 angeordnet. Das Wärmetauschelement 24 kann beispielsweise von einem Wärmeträgermedium durchströmt werden. Das Wärmeträgermedium nimmt dabei die anfallende Abwärme, aus dem Stromkabel 18, auf und transportiert diese Wärme über Leitungen 34 zu einem Verbraucher oder einem Wärmespeicher. Insbesondere handelt es sich bei dem Wärmeträgermedium um Luft, Wasser, eine andere Flüssigkeit oder, sofern das Wärmetauschelement 24 als Wärmerohr ausgebildet ist, beispielsweise um CO₂. Die durch das Stromkabel 18 erzeugte Wärme kann somit nutzbar gemacht werden.

Insbesondere handelt es sich bei dem Wärmeleitelement 17 um eine thermische aktivierte Spundwand wie beispielsweise beschrieben in EP 2374942 - "Vorrichtung und Verfahren zur Wärmegewinnung aus der Umgebung" oder DE 10 2020 106 331.8 - "Thermisch aktives Spundwandschlossprofil". Hierbei wird durch das Wärmetauschelement 24 einerseits die Wärme von dem Stromkabel 18 effizient abgeführt und zweitens diese Wärme nutzbar gemacht für einen Verbraucher.

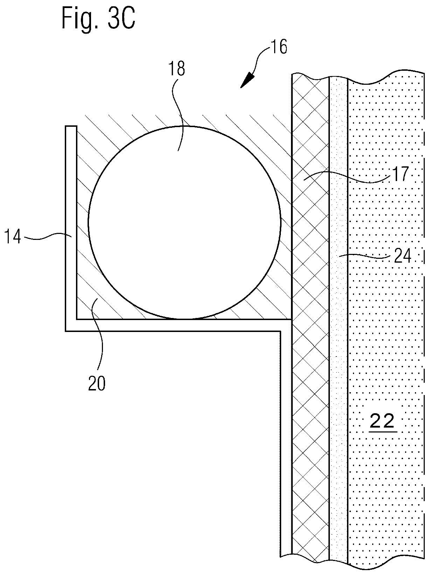

In einer weiteren Ausführungsform gezeigt in der Figur 3C sind das Stromkabel 18 und das Wärmetauschelement 24 auf gegenüberliegenden Seiten des Wärmeleitelements 17 angeordnet.

Nachfolgend wird Bezug genommen auf die Figuren 4A-4D. Die Ausführungsform der Figuren 4A-4D können dabei frei kombiniert werden mit den Ausführungsformen der Figuren 3A bis 3C. Hierzu ist insbesondere eine Kontaktfläche 26 angedeutet, wobei die Kontaktfläche 26 unmittelbar anliegen kann an ein Wärmetauschelement 24 gemäß der Ausführungsform der Figur 3B oder unmittelbar anliegen kann an einen Wärmeleitelement 17 gemäß den Ausführungsformen der Figuren 3A und 3C.

Die Ausführungsform der Figur 4A entspricht dabei den Ausführungsformen der Figuren 3A bis 3C, wobei ein Wärmeleitmittel 20 in der Ausnehmung 16 gebildet durch das Aufnahmeelement 14 angeordnet ist und das Stromkabel 18 umgibt zur Verbesserung der Wärmeleitfähigkeit in Richtung des Wärmetauschelements 24 bzw. des Wärmeleitelements 17. Dabei ist das Aufnahmeelement 14 der Figur 4A Z-förmig ausgebildet und umgibt das Stromkabel 18 lediglich an zwei Seiten, wobei das Stromkabel 18 an seiner dritten Seite unmittelbar an das Wärmetauschelement 24 oder das Wärmeleitelement 17 angrenzt. In einer alternativen Ausführungsform gezeigt in der Figur 4B ist das Aufnahmeelement 14' U-förmig ausgebildet, sodass das Aufnahmeelement 14' das Stromkabel 18 an drei Seiten umgibt. In beiden Ausführungsformen der Figuren 4A und 4B ist das Aufnahmeelement 14, 14' im unmittelbaren Kontakt mit entweder dem Wärmetauschelement 24 oder dem Wärmeleitelement 17. Insbesondere ist das Aufnahmeelement 14, 14' hergestellt aus Stahl, welcher eine gute Wärmeleitfähigkeit aufweist und somit die vom Stromkabel 18 in Richtung des Wärmetauschelements 24 bzw. des Wärmeleitelements 17 übertragene Wärmemenge optimiert.

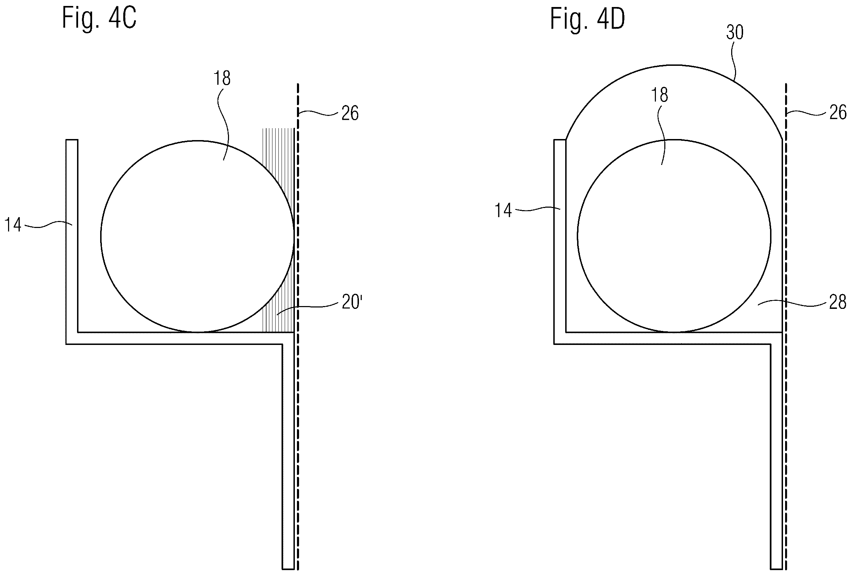

In der Figur 4C ist eine Vergussmasse 20' lediglich eingebracht im Bereich der unmittelbaren Kontaktfläche zwischen dem Stromkabel 18 und der Grenzfläche 26 zum Wärmetauschelement 24 bzw. Wärmeleitelement 17. Hierdurch wird eine einseitige Wärmeleitung ermöglicht. Das Aufnahmeelement 14 dient hierbei im Wesentlichen zur mechanischen Halterung der Stromkabel 18, unterstützt jedoch selbstverständlich, aufgrund des unmittelbaren Kontakts an der Aufliegestelle, auch die Wärmeleitung.

In der Figur 4D ist das Aufnahmeelement 14 abgedeckt durch eine Abdeckung 30. Hierdurch wird ein Hohlraum 28 geschaffen, in dem das Stromkabel 18 angeordnet ist. Der Hohlraum 28 wird sodann von einem Wärmeträgermedium durchflossen, welches Wärme von dem Stromkabel 18 aufnimmt und weiterleitet zur weiteren Verwendung. Das Wärmetauschelement wird somit gebildet durch die Abdeckung 30 und wirkt zusammen mit der Aufnahme 14. Eine vollständige Überdeckung oder ein vollständiges Umschließen des Stromkabels 18 durch die Abdeckung 30 ist ebenfalls möglich. Insbesondere kann das Wärmetauschelement durch die Abdeckung 30 mit dem Wärmetauschelement 24 kombiniert werden, welches insbesondere am Wärmeleitelement 17 angeordnet ist. Bei dem Wärmeträgermedium, welches durch den Hohlraum 28 strömt, kann es sich beispielsweise um Wasser, eine andere Flüssigkeit, Luft oder ein Gas handeln, welches vorzugsweise eine hohe spezifische Wärme aufweist. Die Abdeckung 30 kann dabei als Plastikabdeckung oder als Metallabdeckung ausgebildet sein. Insbesondere eine Kunststoffabdeckung ist kostengünstig in der Herstellung, wohingegen eine Metallabdeckung einen besseren Schutz des Stromkabels vor Beschädigung gewährt.

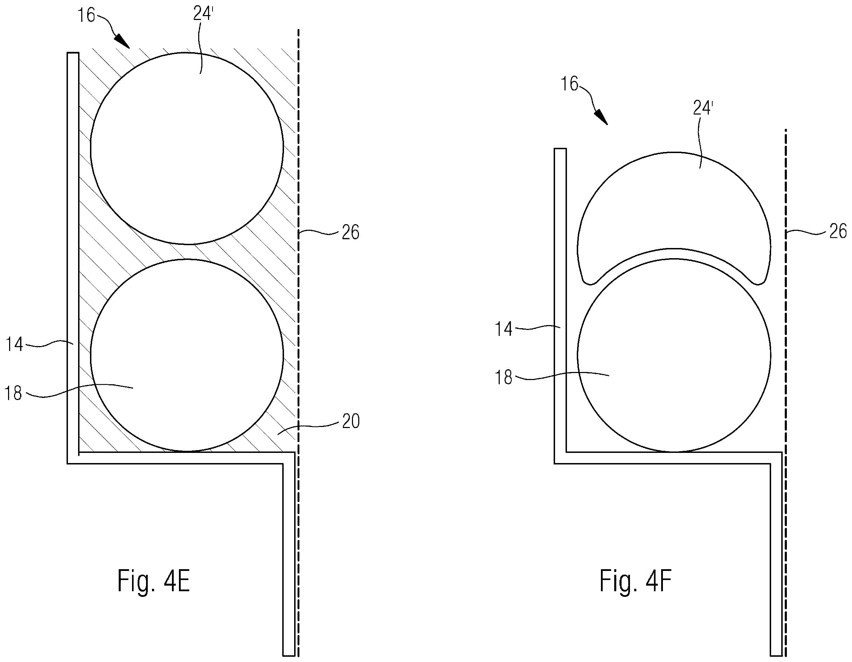

Im Folgenden wird Bezug genommen auf die Ausführungsformen der Figuren 4E und 4F. Hierbei ist ein Wärmetauschelement 24' vorgesehen, welches sich entlang des Stromkabels 18 erstreckt und ebenfalls in der Ausnehmung 16 des Aufnahmeelements 14 angeordnet ist. Hierbei kann, wie gezeigt in der Fig. 4E genau ein Wärmetauschelement 24' in einem Aufnahmeelement 14 angeordnet sein. Alternativ sind mehrere solche Wärmetauschelemente 24' in jeweils einem Aufnahmeelement 14 vorgesehen. Das Wärmetauschelement ist dabei rohrförmig, so dass durch das Wärmetauschelement 24' ein Wärmeträgermedium strömen kann entlang der jeweiligen Stromkabel 18, ohne dass das Wärmeträgermedium mit den Stromkabeln 18 in Kontakt kommt. Hierbei kann das Wärmetauschelement 24' einen runden Querschnitt haben wie gezeigt in der Fig. 4E. Dabei kann eine thermische Kopplung zwischen den Stromkabeln des jeweiligen Aufnahmeelements und dem Wärmetauschelement durch Vorsehen eines Wärmeleitmittels 20, welches sowohl die Stromkabel 18 als auch das Wärmetauschelement 24' umgibt um somit eine effiziente Wärmeübertragung von den Stromkabeln 18 auf das Wärmeträgermedium, welches in dem Wärmetauschelement 24' strömt, zu gewährleisten. Alternativ hierzu kann das Wärmetauschelement plastisch verformbar sein, wie es in Fig. 4F gezeigt ist, so dass das Wärmetauschelement 24' zumindest teilweise an einem, mehreren und bevorzugt allen Stromkabeln 18 in dem jeweiligen Aufnahmeelement formschlüssig anliegt, so dass durch den direkten Kontakt zwischen Wärmetauschelement 24' und Stromkabeln 18 ein effizienter Wärmeübertrag gewährleistet wird. Selbstverständlich kann auch in der Ausführungsform der Figur 4F ein Wärmeleitmittel vorgesehen sein zur Verbesserung der Wärmeleitung, welches die Stromkabel 18 und das Wärmetausch-element 24' zumindest teilweise umgibt.

Weiterhin können die Wärmetauschelemente 24' der Figuren 4D bis 4F selbstverständlich mit dem Wärmetauschelement 24 kombiniert werden, welches mit dem Wärmeleitelement 17 verbunden ist gemäß den Figuren 3B und 3C

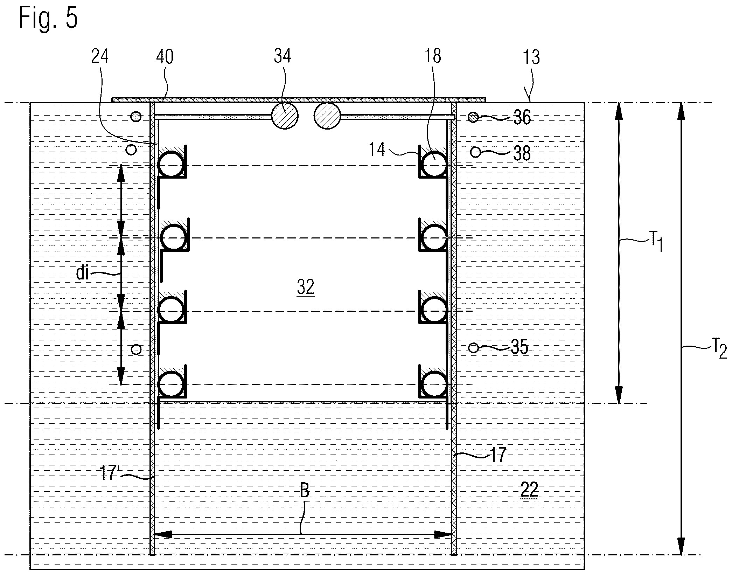

Nachfolgend wird Bezug genommen auf die Ausführungsform der Figur 5. In der Ausführungsform der Figur 5 weist die Kabeltrasse ein erstes Wärmeleitelement 17 und ein hiervon im Abstand B in horizontaler Richtung beabstandetes zweites Wärmeleitelement 17' auf. Das erste Wärmeleitelement und/oder das zweite Wärmeleitelement können dabei als Spundwände 120 ausgebildet sein. Mit jedem Wärmeleitelement 17, 17' sind jeweils vier Aufnahmeelemente verbunden, welche wiederum eine entsprechende Anzahl an Stromkabeln 18 aufnehmen. Die Aufnahmeelemente 14 und entsprechend die Stromkabel 18 sind dabei in einem konstanten vertikalen Abstand di angeordnet. Hiervon kann, wie vorstehend bereits erläutert, abgewichen werden, sodass unterschiedliche Abstände di zwischen den einzelnen Stromkabeln 18 gewählt werden können. Hierbei können insbesondere Stromkabel 18 näher an der Erdoberfläche 13 weiter beabstandet sein als die tiefer liegenden Stromkabel, welche aufgrund des sich in das Erdreich 22 erstreckende Anteil der Wärmeleitelemente 17, 17' besser Wärme an das Erdreich abgeben können. Zudem wirkt sich ein höherer Wärmeeintrag in tieferen Schichten weniger dramatisch auf die Erwärmung der Erdoberfläche 13 aus, die sich nach Möglichkeit nicht oder nur sehr wenig ändern soll. Insbesondere sind die Wärmeleitelemente 17, 17' als Spundwandprofile 12, welche zu einer Spundwand 120 zusammengefügt sind, ausgebildet. Die Spundwandprofile sind dabei bis zu einer Tiefe T2 in das Erdreich eingebracht. T2 korrespondiert dabei insbesondere mit der vertikalen Länge der einzelnen Wärmeleitelemente 17, 17' und insbesondere mit der Länge der Spundwandprofile 12 und beträgt beispielsweise 3-6m und insbesondere 3-10m. Die Stromkabel 18 sind dabei verteilt über eine Tiefe T1. Tiefe T1 kann dabei zwischen 2-3m und bevorzugt bis 4m betragen. Zwischen den beiden Wärmeleitelementen 17, 17' ist ein erdfreier Kanal 32 ausgebildet. In diesem erdfreien Kanal 32 sind die in den Aufnahmeelementen 14 verlegten Stromkabel 18 frei zugänglich angeordnet. Über eine Belüftung des Kanals 32 kann eine konvektive Kühlung der Stromkabel 18 erreicht werden. Hierbei kann es sich insbesondere um eine Zwangsbelüftung handeln.

Vorzugsweise beträgt die Breite B, also der Abstand zwischen den beiden Wärmeleitelementen 17, 17' zwischen 2-4m. Somit beträgt auch die Breite der Kabeltrasse gemäß der vorliegenden Erfindung lediglich 2-4m, sodass eine erhebliche Reduktion des Platzbedarfs der Kabeltrasse sowie eine deutliche Verringerung der Tiefbauarbeiten erreicht werden kann, und gleichzeitig gegenüber dem Stand der Technik die Wärmeabfuhr der Stromkabel an das Erdreich deutlich erhöht wird.

Der Kanal 32 kann dabei abgedeckt sein durch eine Fahrbahn 40 und/oder kann während der Bauphase als stabile Baustraße für die Erstellung der Kabeltrasse oder nach Fertigstellung der Trasse als dauerhafter, bevorzugt land- und forstwirtschaftlich genutzter Verkehrsweg genutzt werden.

Zwischen den Aufnahmeelementen 14 und den Wärmeleitelementen 17, 17' sind jeweils Wärmetauschelemente 24 angeordnet wie vorstehend beschrieben.

Diese Wärmetauschelemente 24 sind über Verbindungsleitungen 34, die z.B. als Wärme(fern)netz ausgebildet sein können, mit Verbrauchern oder thermischen Speichern verbunden. Die Verbindungsleitungen 34 sind dabei ebenfalls im Kanal 32 angeordnet und somit leicht zugänglich.

Weiterhin sind Sensoren 35 vorgesehen, welche die Temperatur im Erdreich 22, im erdfreien Kanal 32 und/oder den Kabeln 18 erfassen.

Weiterhin weist die Kabeltrasse eine Bewässerungsvorrichtung 36 auf, über die das Erdreich 22 unmittelbar neben den Wärmeleitelementen 17, 17' bewässert werden kann. Über einen Feuchtigkeitssensor 38 kann die Feuchte des Erdreichs 22 erfasst werden und somit eine Bewässerung in Abhängigkeit der erfassten Feuchte gesteuert werden. Hierbei leitet feuchtes Erdreich (mit λ bis 2 W/mK) Wärme deutlich besser ab als trockenes Erdreich (mit λ ≈ 0,3 W/mK). Reicht somit die Wärmeleitfähigkeit des umgebenen Erdreichs 22 insbesondere aufgrund der permanent stattfindenden Wasserverdunstung nicht mehr aus, um die durch die Stromkabel 18 erzeugte Wärme abzuführen, kann über die Bewässerungsvorrichtung 36 die Feuchtigkeit des Erdreichs erhöht werden, wodurch eine verbesserte Wärmeableitung erreicht werden kann. Damit kann außer der Maximierung der Nennleistung der Trasse zusätzlich eine zeitlich befristete Leistungssteigerung realisiert werden, um Spitzenlasten besser abdecken zu können, wobei das Zeitfenster der Leistungssteigerung gegenüber dem Stand der Techniksignifikant deutlich größer ist.

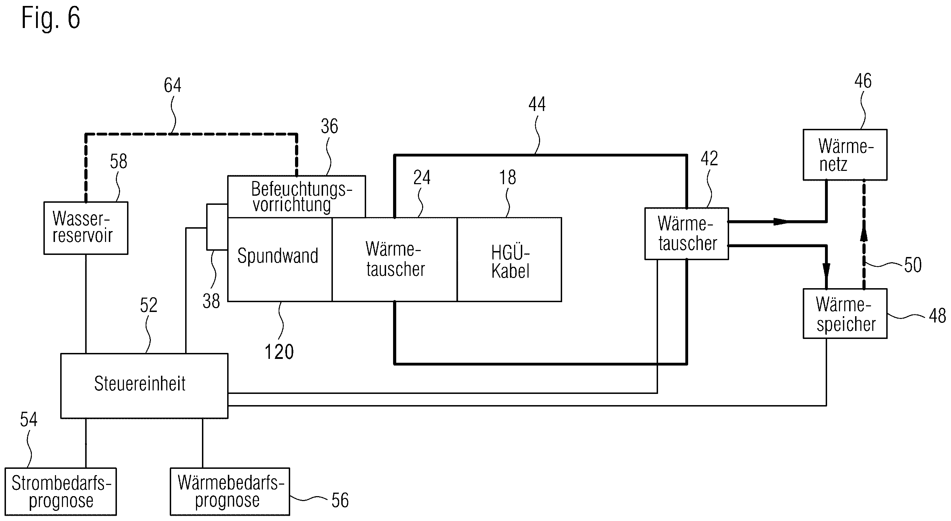

Nachfolgend wird Bezug genommen auf die Figur 6 als Beispiel für eine thermisch aktivierte Spundwand 120, die ein Wärmetauschelement 24 aufweist. Hier ist die Stromtrasse mit einer Spundwand 120 als Wärmeleitelement 17, einem Wärmetauschelement 24 und dem Stromkabel 18, dargestellt als Hochspannungsgleichstromübertragungs-(HGÜ-)kabel, dargestellt. Bei dem Wärmetauscher 42 mit entsprechenden Verbindungsleitungen 44 (welche den Verbindungsleitungen 34 der Fig. 5 entsprechen können) wird die Wärme, die von den Stromkabeln 18 erzeugt wird und vom Wärmeträgermedium im Wärmetauschelement 24 aufgenommen wird, in ein Wärmenetz 46 eingespeist und somit Verbrauchern zur Verfügung gestellt. Hierzu kann ein Wärmetauscher 42, wie in Figur 6 dargestellt, vorgesehen sein. Alternativ ist das Wärmetauschelement 24 über die Verbindungsleitungen 44 unmittelbar mit dem Wärmenetz 46 und/oder dem Wärmespeicher 48 verbunden, so dass kein Wärmetauscher vorgesehen ist. Besteht kein oder nur ein geringer Bedarf an Wärme, kann die durch die Stromkabel 18 erzeugte Wärme in einem Wärmespeicher 48 gespeichert werden und sodann bei Bedarf entsprechend der gestrichelten Linie 50 in das Wärmenetz eingespeist werden. Hierbei sind Wärmetauscher 42 und Wärmespeicher 48 über eine Steuereinheit 52 steuerbar, wobei eine Strombedarfsprognose 54 und eine Wärmebedarfsprognose 56 in die Steuerung des Wärmetauschers 42 und des Wärmespeichers 48 einfließen. Hierbei betrifft die Strombedarfsprognose 54 die Menge des zu transportierenden Stroms durch die Stromkabel 18. Die Wärmebedarfsprognose betrifft den zu erwarteten Bedarf an Wärme. Sollte hierbei die durch die Stromkabel 18 erzeugte Wärme den Bedarf durch die Verbraucher im Wärmenetz 46 übersteigen, kann Wärme im Wärmespeicher 48 gespeichert werden. Übersteigt hingegen der Bedarf an Wärme durch die Verbraucher im Wärmenetz 46 die durch die Stromkabel erzeugte Wärme, kann Wärme, gespeichert im Wärmespeicher 48, an die Verbraucher über das Wärmenetz 46 geliefert werden. Im Sommer, wenn in Haushalten in der Regel nur Wärme für Warmwasser benötigt wird, sorgt die Steuereinheit 52 dafür, dass in Abschnitten der Kabeltrasse mit Wärmetauschelementen 24, in denen nutzbare Wärme anfällt, das Wärmeträgermedium mittels einer entsprechenden Pumpe in den (saisonalen) Wärmespeicher 48 und gleichzeitig kaltes Wärmeträgermedium aus dem Wärmespeicher 48 zurück gefördert wird, sofern die Temperatur im Wärmespeicher 48 und in den Leitungen 34 eine ausreichende Temperaturspreizung gewährleistet. Dieser Prozess wird so lange fortgesetzt, bis der Wärmespeicher 48 voll ist. Im Winter kann ein neuer Steuerbefehl der Steuereinheit 52 signalisieren, Wärme aus dem Speicher 48 in das Wärmenetz 46 einzuspeisen, sofern die Wärmebedarfsprognose und der Temperatursensor im Wärmespeicher 48 diesen Vorgang quittieren.

Beispielsweise können die Strombedarfsprognose 54 und die Wärmebedarfsprognose 56 signalisieren aufgrund eines zu erwartenden Temperatursturzes in Süddeutschland in den nächsten 48h einen um 15% höheren Strombedarf zum Betrieb von Wärmepumpen sowie einen um 40% erhöhten Wärmebedarf. Daraufhin sendet die Steuereinheit an die Bewässerungsvorrichtung ein Signal, den Boden zu befeuchten. Nach Eintreten des Temperatursturzes können über das Steuersignal am Einspeisepunkt der Stromtrasse die Stromstärke und die Trassenleistung erhöht werden, da zwischenzeitlich die Kapazität des Bodens zur Aufnahme von zusätzlicher Wärme geschaffen wurde. In den Abschnitten mit Wärmetauschelementen 24 kann gleichzeitig eine erhöhte Wärmemenge über die Leitungen 34 in das Wärmenetz 46 eingespeist werden.

Weiterhin zeigt Figur 6 eine Bewässerungsvorrichtung 36, welche mit einem Wasserreservoir 58 über eine Verbindungsleitung 64 verbunden ist. Ein Feuchtesensor 38, der insbesondere mit der Steuereinheit 52 verbunden ist, erfasst hierbei die Feuchte des Erdreichs in unmittelbarer Nähe der Kabeltrasse, wobei die Steuereinheit 52 die Feuchte im Erdreich in Abhängigkeit des erfassten Sensorsignals steuert, wie vorstehend beschrieben. So kann insbesondere bei einer Prognose für einen erhöhten Strombedarf der Strombedarfsprognose 54 das Erdreich mittels der Befeuchtungsvorrichtung 36 befeuchtet werden, so dass eine optimale Wärmeableitung ins Erdreich möglich ist bei hoher Last.

Somit wird durch die vorliegende Erfindung einerseits der Platzbedarf einer Kabeltrasse deutlich reduziert durch die Verbesserung der Wärmeleitfähigkeit mittels der Wärmeleitelemente, welche insbesondere aus kostengünstigen und verfügbaren Spundwandprofilen zusammengesetzt sein können. Ein Überhitzen der Kabeltrasse und eine damit verbundene erforderliche Reduzierung der Leistung der Kabeltrasse kann hierdurch gerade vermieden werden. Gleichzeitig kann durch die vorliegende Erfindung die durch die Kabeltrasse erzeugte Wärme nutzbar gemacht werden.

### Bezugszeichenliste:

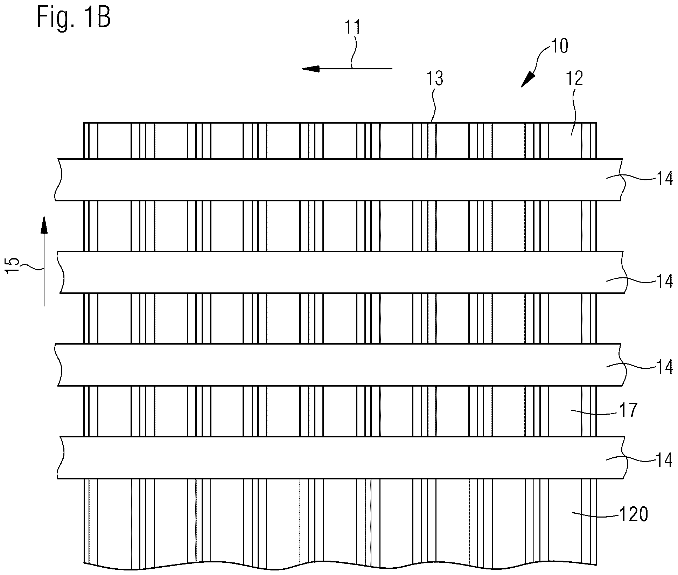

- 10: Kabeltrassenelement
- 11: Verlaufsrichtung
- 12: Spundwandprofil
- 13: Erdoberfläche
- 14: Aufnahmeelement
- 15: Pfeil in Fig. 1B
- 16: Ausnehmung
- 17, 17': Wärmeleitelement
- 18: Stromkabel
- 20, 20': Wärmeleitmittel
- 22: Erdreich
- 24, 24': Wärmetauschelement
- 26: Kontaktfläche
- 28: Hohlraum
- 30: Abdeckung
- 32: Kanal
- 34: Verbindungsleitung
- 35: Temperatursensor
- 36: Bewässerungsvorrichtung
- 38: Feuchtigkeitssensor
- 40: Fahrbahn
- 42: Wärmetauscher
- 44: Verbindungsleitungen
- 46: Wärmenetz
- 48: Wärmespeicher
- 50: Linie
- 52: Steuereinheit
- 54: Strombedarfsprognose
- 56: Wärmebedarfsprognose
- 58: Wasserreservoir
- 64: Verbindungsleitung
- 120: Spundwand

## Patentansprüche

1. Kabeltrassenelement zur Verwendung in einer unterirdischen Kabeltrasse, mit
einem Wärmeleitelement zur Einbringung ins Erdreich und Weiterleitung der in den Stromkabeln entstehenden Wärme in das Erdreich und/oder zu einem Wärmetauschelement,
mehreren mit dem Wärmeleitelement verbundenen Aufnahmeelementen jeweils zur Aufnahme einer oder mehrerer Stromkabel, wobei sich die Aufnahmeelemente zumindest abschnittsweise und insbesondere kontinuierlich entlang des Wärmeleitelemets erstrecken und in einem Abstand zueinander angeordnet sind.

2. Kabeltrassenelement nach Anspruch 1, **dadurch gekennzeichnet, dass** das Wärmeleitelement gebildet wird durch eine Vielzahl miteinander verbundener Spundwandprofile, welche im Boden verankerbar sind, und/oder
**dadurch gekennzeichnet, dass** durch das Wärmeleitelement ein Tunnelbauelement oder ein Kanalbauelement gebildet wird.

3. Kabeltrasse zur unterirdischen Verlegung von Stromkabeln mit
mindestens einem Wärmeleitelement in direktem Kontakt mit dem Erdreich,
mehreren Stromkabeln, welche in einem Abstand zueinander mit dem Wärmeleitelement verbunden sind und zur Ableitung von Wärme der jeweiligen Stromkabel an das Wärmeleitelement thermisch gekoppelt sind, wobei das Wärmeleitelement und die Stromkabel im Erdreich angeordnet sind.

4. Kabeltrasse nach Anspruch 3, **gekennzeichnet durch** ein oder mehrere Kabeltrassenelemente gemäß Anspruch 1 oder 2, wobei die Stromkabel in den Aufnahmeelementen angeordnet sind.

5. Kabeltrasse nach Anspruch 3 oder 4, **dadurch gekennzeichnet, dass** sich das mindestens eine Wärmeleitelement zumindest teilweise horizontal erstreckt und die Stromkabel in einem horizontalen Abstand zueinander angeordnet sind.

6. Kabeltrasse nach einem der Ansprüche 3 bis 5, **dadurch gekennzeichnet, dass** das mindestens ein Wärmeleitelement sich zumindest teilweise vertikal erstreckt.

7. Kabeltrasse nach Anspruch 6, **dadurch gekennzeichnet, dass** zwei Wärmeleitelemente vertikal in einem horizontalen Abstand zueinander angeordnet sind, wobei mit jedem Wärmeleitelement mehrere Aufnahmeelemente mit Stromkabel verbunden sind.

8. Kabeltrasse nach Anspruch 7, **dadurch gekennzeichnet, dass** zwischen den beiden Wärmeleitelementen ein erdfreier Kanal gebildet ist, in dem die Stromkabel angeordnet sind, wobei die Wärmeleitelemente auf ihrer dem Kanal gegenüberliegenden Seite an das Erdreich angrenzen.

9. Kabeltrasse nach einem der Ansprüche 3 bis 8, **dadurch gekennzeichnet, dass** durch das mindestens eine Wärmeleitelement ein Kanal oder ein Tunnel ausgebildet wird.

10. Kabeltrasse nach einem der Ansprüche 3 bis 9, **dadurch gekennzeichnet, dass** die jeweiligen Stromkabel in Aufnahmeelementen angeordnet sind, wobei jedes Stromkabel insbesondere von drei Seiten von dem Aufnahmeelement und/oder dem Wärmeleitelement umgeben ist.

11. Kabeltrasse nach einem der Ansprüche 3 bis 10, **gekennzeichnet durch** eine Bewässerungsvorrichtung, welche im Erdreich neben der Kabeltrasse angeordnet ist zur Bewässerung zur Verbesserung der Wärmeleitfähigkeit des Erdreichs.

12. Kabeltrasse nach einem der Ansprüche 3 bis 11, **dadurch gekennzeichnet, dass** die Stromkabel Gleichstromkabel sind und die Kabeltrasse eine Gleichstrom-Übertragungstrasse ist oder dass die Stromkabel Wechselstromkabel sind und die Kabeltrasse eine Wechselstrom-Übertragungstrasse ist, und/oder es sich bei den Stromkabeln um supraleitende Kabel handelt.

13. Kabeltrasse nach einem der Ansprüche 3 bis 12, **gekennzeichnet durch** ein oder mehrere Wärmetauschelemente zur Aufnahme der in den Stromkabeln entstehenden Wärme und Weiterleitung mittels eines Wärmeträgermediums, wobei das Wärmetauschelement jeweils mit einem oder mehreren Stromkabeln verbunden ist.

14. Kabeltrasse nach Anspruch 13, **dadurch gekennzeichnet, dass** das mindesten eine Wärmetauschelement zwischen einem der Stromkabel und dem Wärmeleitelement angeordnet ist oder das Wärmetauschelement auf der dem Stromkabel gegenüberliegenden Seite des Wärmeleitelements angeordnet ist, und/oder **dadurch gekennzeichnet, dass** das mindestens ein Wärmetauschelement als Abdeckung ausgebildet ist, welche jeweils ein oder mehrere Stromkabel zumindest teilweise umgibt, so dass zwischen der Abdeckung und dem ein oder mehreren Stromkabeln ein Wärmeträgermedium strömen kann, und/oder **dadurch gekennzeichnet, dass** das mindestens ein Wärmetauschelement zumindest abschnittweise in dem jeweiligen Aufnahmeelement entlang der Stromkabel angeordnet ist, und/oder **dadurch gekennzeichnet, dass** das Wärmetauschelement als Hohlkörper ausgebildet ist, welches ein Wärmeträgermedium führt, wobei der Hohlkörper formschlüssig an einem oder mehreren Stromkabeln anliegt oder plastisch verformbar ist und/oder mittels eines Wärmeleitmittels thermisch gekoppelt ist mit einem oder mehreren Stromkabeln.

15. Kabeltrasse nach Anspruch 13 oder 14, wobei eine Verbindungsleitung entlang der Kabeltrasse vorgesehen ist und insbesondere im erdfreien Kanal zur Weiterleitung eines Wärmeträgermediums an einen Verbraucher und/oder Wärmespeicher.

16. System mit einer Kabeltrasse nach einem der Ansprüche 13 bis 15.

17. System nach Anspruch 16, **gekennzeichnet durch** eine Wärmepumpe und/oder einen Wärmetauscher.

18. System nach Anspruch 16 oder 17, **gekennzeichnet durch** einen Wärmespeicher und/oder Wärmenetz, wobei das Wärmetauschelement direkt oder indirekt mit dem Wärmespeicher und/oder dem Wärmenetz verbunden ist.

19. Verfahren zum Betrieb einer Kabeltrasse nach einem der Ansprüche 13 bis 15 und insbesondere eines Systems nach einem der Ansprüche 16 bis 18, wobei die in den Stromkabeln erzeugte Wärme über das Wärmeträgermedium abgeführt wird.

20. Verfahren nach Anspruch 19, wobei die Kabeltrasse gekühlt wird mittels dem Wärmeträgermedium.

21. Verfahren nach Anspruch 19 oder 20, wobei bei einem Wärmebedarf, der kleiner ist als die gewonnene Wärme aus den Stromkabeln, die überschüssige Wärme in einem Wärmespeicher gespeichert wird, der bevorzugt als Saisonspeicher ausgebildet ist, und/oder wobei bei einem Wärmebedarf, der größer ist als die aus den Stromkabeln gewonnene Wärme, der zusätzliche Wärmebedarf aus einem Wärmespeicher entnommen wird.
